# FASCICULE DE BREVET EUROPEEN

(11) **EP 2 454 006 B1**
(45) Date de publication et mention de la délivrance du brevet: **02.09.2015**
(21) Numéro de dépôt: 10730189.7
(22) Date de dépôt: 13.07.2010
(51) Int. Cl.: B01J 20/04, B01J 20/30, B01J 20/32, B01J 20/28, B01D 53/64, B01J 20/16

(54) **COMPOSITION SOLIDE MINERALE, SON PROCEDE DE PREPARATION ET SON UTILISATION EN ABATTEMENT DE METAUX LOURDS DES GAZ DE FUMEES**
MINERALISCHE ZUSAMMENSETZUNG, VERFAHREN ZU IHRER HERSTELLUNG UND IHRE VERWENDUNG ZUR VERRINGERUNG DES SCHWERMETALLGEHALTS IN RAUCHGASEN
SOLID MINERAL COMPOSITION, METHOD FOR PREPARING SAME AND USE THEREOF FOR REDUCING HEAVY METALS IN FLUE GAS

(30) Priorité: 13.07.2009 BE 200900426; 07.05.2010 US 332256 P
(43) Date de publication de la demande: 23.05.2012
(73) Titulaire: S.A. LHOIST RECHERCHE ET DEVELOPPEMENT, 1342 Ottignies-Louvain-La-Neuve (BE); Université de Liège, 4031 Angleur (Liege) (BE)
(72) Inventeur: BRASSEUR, Alain, B-4460 Grâce-Hollogne (BE); PIRARD, Jean-Paul, B-4032 Liège (BE); LAUDET, Alain, B-5000 Namur (BE)
(74) Mandataire: Coulon, Ludivine
(86) Numéro de dépôt international: PCT/EP2010/060057
(87) Numéro de publication internationale: WO 2011/006890

(56) Documents cités:
- WO-A-2007/053786
- US-A- 2 276 503
- US-A- 3 345 265
- US-A1- 2007 267 343
- US-A1- 2008 028 932
- US-B1- 6 582 497

## Description

La présente invention se rapporte à une composition solide d'abattement de métaux lourds dans les gaz de fumées, comprenant un composé minéral.

Les métaux lourds, notamment le mercure, sont des composés toxiques, présents dans les gaz de fumées, notamment à l'état gazeux et dont l'émission est en général strictement réglementée. Par les termes "métaux lourds", on entend principalement les métaux ayant une densité supérieure à 5000 kg/m³, notamment les métaux lourds les plus courants, faisant généralement l'objet d'une réglementation, à savoir le plomb, le chrome, le cuivre, le manganèse, l'antimoine, l'arsenic, le cobalt, le nickel, le vanadium, le cadmium, le thallium et le mercure, de préférence le plomb, le thallium, le cadmium et le mercure, en particulier, le mercure. Ces métaux peuvent se présenter à l'état élémentaire ou sous forme ionique.

L'abattement de métaux lourds présents dans les gaz de fumées est dans l'état de la technique généralement opéré au moyen de composés carbonés, tels que les charbons actifs, cokes de lignite ou analogues. Le choix du ou des types de composés carbonés dépend notamment des valeurs réglementaires à ne pas dépasser pour ces types de polluants.

Dans de nombreuses situations, en particulier dans le cas des unités d'incinération de déchets, les émissions initiales de certains métaux lourds sont supérieures, parfois largement, à la réglementation en vigueur, de sorte qu'il faut absolument abattre, parfois considérablement, ces polluants. Un composé carboné peut être mis en oeuvre soit tel quel, soit en mélange avec un réactif basique, en lit fixe sous forme granulaire ou par injection dans le gaz sous forme pulvérulente ; les particules solides sont alors piégées en aval, par exemple dans un filtre textile, où leur action est prolongée.

L'efficacité des composés carbonés pour abattre les métaux lourds est unanimement reconnue. Néanmoins, l'emploi de ces composés carbonés dans les gaz de fumées présente deux inconvénients majeurs :
- l'augmentation de la teneur en carbone organique total dans les poussières présentes au niveau du rejet de ces fumées, teneur en carbone qui est sévèrement réglementée;
- le risque d'inflammabilité, d'autant plus important que la température des gaz à épurer est élevée.

Une amélioration apportée par l'homme du métier pour résoudre les problèmes d'ignition des composés carbonés a été de les utiliser en mélange avec des substances ininflammables, tels que la chaux. Malheureusement, cette amélioration a effectivement réduit les risques d'ignition des composés carbonés mais ne les a pas complètement supprimés. En effet, des points chauds peuvent encore apparaître, même à basse température (par exemple 150°C), notamment en présence d'infiltration d'air dans des zones où les composés carbonés font l'objet d'accumulation.

Par exemple, le document US6582497 divulgue un mélange de composé alcalin, de charbon et de charbon imprégné d'un composé halogéné pour l'abattement du mercure dans les gaz de fumées. Toutefois, ce document ne donne aucune information quant au dopage éventuel de composés minéraux ainsi qu'à leur effet sur l'abttement du mercure des gaz de fumées.

Le document US 2008/028932 présente l'utilisation d'oxydants, de préférence de l'hypochlorite de calcium, afin d'améliorer l'abattement de mercure de courants gazeux. L'hypochlorite de calcium est ajouté en amont de l'injection d'adsorbant et réagit avec ce dernier. Cependant, il est connu que l'hypochlorite de calcium est un composé corrosif, comburant et dangereux pour l'environnement, ce qui rend son utilisation problématique.

Enfin, le document WO 2007/053786 décrit l'utilisation de chlorure ou autres oxydants, ajoutés avec le charbon avant la combustion, ce qui entraîne l'oxydation du mercure en un sel et facilite sa captation ultérieure.

Les composés carbonés sont en général des composés coûteux et l'étape mettant en oeuvre lesdits composés carbonés s'intègre difficilement dans un procédé complet de traitement des gaz de fumées, qui doit souvent éliminer également les polluants azotés. L'élimination des oxydes d'azote par voie catalytique est généralement pratiquée à une température de gaz supérieure à 200°C, à laquelle les composés carbonés peuvent brûler en présence d'oxygène. Pour une bonne compatibilité avec une étape du procédé utilisant les composés carbonés, il faut alterner refroidissement des gaz de fumées et chauffage de ces derniers. Ceci représente une perte énergétique importante et un surcoût. Il est donc difficile d'intégrer les composés carbonés dans un procédé de traitement de fumées, étant donné les problèmes d'ignition que ces composés provoquent.

Les documents "ES 8704428" ou "ES 2136496", et "GIL, ISABEL GUIJARRO ; ECHEVERRIA, SAGRARIO MENDIOROZ ; MARTIN-LAZARO, PEDRO JUAN BERMEJO ; ANDRES, VICENTA MUNOZ, Mercury removal frôm gaseous streams. Effects of adsorbent geometry, Revista de la Real Academia de Ciencias Exactas, Fisicas y Naturales (Espana) (1996), 90 (3), pp. 197-204" mentionnent qu'il est possible de s'affranchir du carbone pour l'abattement des métaux lourds, en particulier du mercure, par l'utilisation de soufre comme réactif. Le soufre est déposé sur un support minéral, tels que des silicates naturels. De telles formulations pallient ainsi les inconvénients précités des composés carbonés. Dans ce cas, le silicate est considéré comme un support inerte par rapport au polluant à abattre ; ce dernier est piégé par réaction avec le composé soufré pour former en général un sulfure.

Malheureusement, les silicates fonctionnalisés par des composés soufrés font l'objet d'une fabrication dangereuse, lourde et coûteuse qui pénalise son utilisation. Par exemple, le document ES 8704428 divulgue une sulfurisation d'un silicate par une réaction d'oxydation d'acide sulfhydrique à une proportion molaire bien définie dans le but d'adsorber du soufre élémentaire sur ledit silicate. La manipulation d'acide sulfhydrique, très toxique et extrêmement inflammable, est dangereuse et la proportion molaire stricte nécessaire pour éviter toute réaction d'oxydation ultérieure est très contraignante. Le document "ES 2136496" apporte un enseignement similaire, décrivant un procédé de sulfuration de silicates naturels pour retenir les vapeurs de métaux.

Un autre exemple est décrit dans le document US 2007/0267343 qui prévoit la capture de particules de métaux lourds en phase aqueuse en présence d'un composé complexant, de préférence phosphoré et en particulier un phosphate. De cette façon, un complexe est formé entre le phosphate et le métal à capter en phase aqueuse qui présente une solubilité peu élevée et diminue la libération du métal dans des procédés de lixiviation naturels ou induits, et/ou dans les processus de digestion chez les humains ou les animaux. La phase aqueuse dans laquelle se produit la réaction de complexation est donc essentielle et ce procédé ne semble que difficilement applicable à l'abattement en masse du mercure dans des gaz de fumées par un composé pulvérulent.

Le brevet EP 1732668 B1 prévoit l'utilisation de composés minéraux non fonctionnalisés, notamment l'halloysite pour l'abattement de métaux lourds, en particulier de mercure. Cependant, l'efficacité de l'halloysite pour l'abattement de mercure apparaît limitée, en comparaison de certains charbons actifs, entraînant a priori un surdosage. Par ailleurs, l'abattement des métaux lourds par des composés minéraux non fonctionnalisés, comme l'halloysite s'effectue par adsorption (exothermique), donc avec une efficacité qui diminue lorsque la température augmente.

L'invention a pour but de remédier aux inconvénients de l'art antérieur, en procurant une composition solide telle que mentionnée au début, dans laquelle le composé minéral est solide et dopé par un sel d'halogénure, c'est-à-dire que sa surface accessible auxdits gaz de fumées est partiellement ou complètement couverte par le sel d'halogénure, ledit composé minéral étant choisi dans le groupe constitué de l'halloysite, des hydroxydes de calcium ou magnésium ainsi que de leur mélanges.

En effet, il a été observé de manière très inattendue et non prévisible que ce composé minéral dopé par un halogénure sous forme de sel permettait un abattement très efficace, dans une large plage de température, de métaux lourds, notamment à l'état gazeux, présents dans les gaz de fumées, en utilisant un composé solide entièrement minéral, dont la fabrication et la mise en oeuvre sont simples et non dangereuses.

L'effet de cette composition selon l'invention sur le taux d'abattement des métaux lourds est particulièrement inattendu car les performances d'abattement du composé minéral dopé sont sans commune mesure avec celles du composé minéral non dopé. Ainsi certaines matières minérales solides, qui ne possèdent pas de capacité notable d'abattement de métaux lourds à l'état non dopé et en particulier qui ne possèdent pas de porosité significative, comme par exemple la chaux éteinte, présentent après dopage par un sel d'halogénure selon l'invention, des capacités d'abattement de métaux lourds qui peuvent être largement supérieures à de nombreux composés carbonés, pourtant réputés les plus adaptés à l'abattement des métaux lourds. Par ailleurs, des matières minérales solides ayant déjà une propension à l'abattement des métaux lourds, en particulier du mercure comme l'halloysite peuvent voir leur capacité d'abattement plusieurs fois décuplées, après dopage par un sel d'halogénure selon l'invention.

Le composé minéral selon l'invention comprend donc un support minéral, notamment sans capacité notoire d'abattement des métaux lourds, associé à un dopant halogénure sous forme de sel.

Le composé minéral selon l'invention peut donc être de la chaux éteinte, de l'halloysite, à titre d'exemple.

Par « composé minéral dopé par un sel d'halogénure », on entend un composé minéral choisi dans le groupe constitué de l'halloysite, des hydroxydes de calcium ou magnésium ainsi que de leurs mélanges et dérivés, dont la surface accessible aux gaz de fumées est partiellement ou complètement couverte par un sel d'halogénure.

La surface accessible au gaz comprend non seulement la surface externe des particules constitutives du solide minéral mais également une partie ou l'ensemble de la surface interne de ces particules, partiellement poreuses.

Dans une forme de réalisation avantageuse, ledit sel d'halogénure est un sel d'halogénure inorganique, de façon à ne pas introduire de composés carbonés additionnels dans les gaz de fumées.

Le composé minéral dopé par un sel d'halogénure contient, sur base sèche, de 0,5 % à 20 %, de préférence de 1 % à 15 %, en particulier de 1,5 % à 10 % en poids de sel d'halogénure sur la base du poids de la composition selon l'invention. Le sel d'halogénure peut être un halogénure alcalin ou alcalino-terreux, notamment NaCl, NaBr ou Nal, KCl, KBr ou KI, CaCl₂, CaBr₂ ou Cal₂, MgCl₂, MgBr₂ ou Mgl₂, ou encore NH₄Cl, NH₄Br ou NH₄I ou un de leurs mélanges.

Avantageusement, le composé minéral selon l'invention est sous forme pulvérulente, à savoir que la taille des particules est essentiellement supérieure à 1 µm et majoritairement (à plus de 90 %) inférieure à 1 mm , c'est-à-dire qu'elles présentent un d₉₀ inférieur à 1 mm.

Par d₉₀ on entend la valeur interpolée de la courbe de distribution des tailles de particules, telle que 90 % des particules ont une dimension inférieure à ladite valeur.

De façon inattendue, on a pu mettre en évidence que ces composés minéraux ainsi dopés par un sel d'halogénure permettent d'abattre avec une très grande efficacité les métaux lourds, notamment à l'état gazeux, en particulier le mercure et tout particulièrement le mercure métallique Hg°, dans les gaz de fumées.

D'autres formes de réalisation du produit selon l'invention sont indiquées dans les revendications annexées.

La présente invention a également pour objet un procédé de préparation d'une composition solide minérale selon l'invention. Ce procédé comprend les étapes de :
- alimentation d'un composé minéral solide choisi dans le groupe constitué de l'halloysite et des hydroxydes de calcium ou magnésium ainsi que de leurs mélanges,
- alimentation en un sel d'halogénure sous forme liquide, en phase aqueuse, et
- mise en contact dudit composé minéral et dudit sel d'halogénure, et
- formation d'un composé minéral dopé au sel d'halogénure, solide.

Avantageusement, ladite mise en contact dudit composé minéral et dudit sel d'halogénure est réalisée sous agitation.

Comme mentionné précédemment, de préférence, dans le procédé selon l'invention, la matière solide minérale est choisie dans le groupe formé par la chaux éteinte et/ou l'halloysite.

De préférence, ledit composé minéral alimenté présente une humidité comprise entre 0,1 et 100 g/kg, avantageusement entre 2 et 90 g/kg.

Avantageusement, ladite mise en contact est effectuée à température ambiante.

En outre, ladite étape de mise en contact dudit composé minéral et dudit sel d'halogénure est avantageusement une pulvérisation dudit sel d'halogénure sur ledit composé minéral, éventuellement en présence d'une agitation.

Dans une forme de réalisation préférentielle alternative du procédé selon l'invention, ladite étape de mise en contact dudit composé minéral et dudit sel d'halogénure est un trempage en une ou plusieurs étapes, éventuellement sous agitation et éventuellement avec étapes de séchage intermédiaires, dudit composé minéral dans ledit sel d'halogénure en phase liquide.

De préférence, ledit sel d'halogénure en phase liquide, est une solution, aqueuse, présentant une teneur en sel d'halogénure comprise entre 1 % et la saturation en sel de la solution, notamment entre 1 % et 35 %, en particulier entre 5% et 27%, de préférence entre 10 % et 27 % en poids par rapport au poids total de ladite solution. Il faut remarquer qu'une faible concentration en sel dans la solution conduit à une mise en oeuvre plus difficile du mélange ainsi qu'à un séchage ultérieur plus onéreux. Par ailleurs, la concentration de la solution est limitée par la solubilité du sel. La mise en contact du sel d'halogénure et du composé minéral est opérée de façon à favoriser la répartition la plus homogène possible du sel d'halogénure sur la surface externe mais aussi interne accessible du composé minéral.

Avantageusement, le procédé selon l'invention comprend en outre une étape de séchage et/ou de désagglomération dudit composé minéral dopé au sel d'halogénure, de préférence selon des conditions opératoires (température de l'ambiance, temps de séjour...) telles que le composé minéral dopé atteigne une température comprise entre 60 et 200°C, en particulier entre 75 et 170°C, en vue d'atteindre une humidité résiduelle de préférence inférieure à 100 g/kg, avantageusement inférieure à 50 g/kg.

Comme mentionné précédemment, de préférence, dans le procédé selon l'invention, ledit sel d'halogénure est un halogénure alcalin, un halogénure alcalino-terreux ou analogue, de préférence choisi dans le groupe constitué de NaCl, NaBr, Nal, KCI, KBr, KI, CaCl₂, CaBr₂, Cal₂, MgCl₂, MgBr₂, Mgl₂, NH₄Cl, NH₄Br ou NH₄I ou leurs mélanges.

D'autres formes de réalisation du procédé suivant l'invention sont indiquées dans les revendications annexées.

La présente invention se rapporte en outre à une utilisation d'un composé minéral tel que décrit ci-dessus, pour l'abattement des métaux lourds, notamment à l'état gazeux, en particulier de mercure et tout particulièrement de mercure métallique Hg°, présents dans les gaz de fumées, par mise en contact des gaz de fumées avec la composition solide minérale précitée et à une utilisation d'un mélange de réactif basique et de ladite composition solide minérale pour le traitement des gaz de fumées.

Le composé minéral dopé selon l'invention est donc mis en contact avec le gaz de fumées à traiter, soit tel quel, soit en association avec une autre matière solide, en particulier en mélange avec un agent basique couramment utilisé pour l'abattement des gaz acides des fumées, tels que la chaux ou analogues.

Dès lors, la mise en oeuvre de la composition solide minérale selon l'invention ne nécessite que l'obtention d'un produit simple d'utilisation, de préférence sec.

L'utilisation du composé minéral dopé selon l'invention pour l'abattement de métaux lourds comprend donc une mise en contact dudit composé minéral dopé, de préférence à l'état sec, réalisée à une température comprise dans la plage allant de 70 à 350°C, notamment entre 110 et 300°C et de manière particulièrement préférentielle entre 120 et 250°C. La possibilité d'opérer à des températures voisines ou supérieures à 200°C, entre autres pour la mise en contact, permet de maintenir une température relativement constante tout au long du procédé de traitement des gaz de fumée et d'éviter ou de limiter les étapes de refroidissement et de chauffage consécutives pour l'élimination des métaux lourds puis, celle des composés azotés par catalyse.

Avantageusement, le composé minéral selon l'invention est utilisé sous forme pulvérulente, à savoir que la taille des particules est majoritairement (à plus de 90 %) inférieure à 1 mm (d₉₀ < 1 mm) et essentiellement supérieure à 1 µm. Le composé minéral est alors injecté par voie pneumatique dans la veine gazeuse.

L'utilisation du composé minéral dopé selon l'invention pour l'abattement de métaux lourds dans les gaz de fumées est souvent à intégrer dans un traitement complet de gaz de fumées. Un tel traitement comprend une étape d'élimination des polluants acides majoritaires par mise en contact desdits gaz de fumées avec des réactifs basiques. D'une manière générale, les polluants acides majoritaires dans les gaz de fumées comprennent les acides chlorhydrique, fluorhydrique, les oxydes de soufre ou encore les oxydes d'azote, leurs teneurs à l'émission dans les gaz de fumées avant traitement sont de l'ordre de plusieurs dizaines à plusieurs centaines de mg/Nm³.

Lorsque l'utilisation du composé minéral dopé selon l'invention pour l'abattement de métaux lourds dans les gaz de fumées est intégrée dans un traitement complet de gaz de fumées, des réactifs basiques, par exemple, la chaux, et ledit composé minéral dopé sont mis en oeuvre séparément ou en mélange. Ce dernier cas permet un gain d'investissement et d'espace, puisque dès lors deux étapes peuvent être réalisées simultanément et au même endroit.

D'autres utilisations selon l'invention sont mentionnées dans les revendications annexées.

D'autres caractéristiques, détails et avantages de l'invention ressortiront de la description donnée ci-après, à titre non limitatif et en faisant référence aux exemples.

L'invention va maintenant être décrite plus en détail au moyen d'exemples non limitatifs.

Les exemples 1 à 9 et l'exemple comparatif sont des essais à l'échelle du laboratoire, selon la procédure expérimentale suivante. Environ 100 mg de composé minéral dopé par un sel d'halogénure (exemples 1 à 9, selon l'invention) ou non dopé (exemple comparatif) sont placés au centre d'un réacteur cylindrique de 110 mm de long et 10 mm de diamètre intérieur, de manière à constituer un lit homogène sur de la laine de roche. Un courant d'azote contenant 600 µg/Nm³ de mercure métallique (Hg°), avec un débit total de 2,8 10⁻⁶ Nm³/s traverse ce lit. Un détecteur VM-3000 de *Mercury Instruments* permet de mesurer le taux de mercure métallique, à la sortie du réacteur. Préalablement à son arrivée au niveau du détecteur, le gaz traverse une solution de SnCl₂, de façon à convertir en mercure métallique l'éventuelle fraction du mercure présente sous forme ionique. De la sorte, la totalité du mercure est mesurée. Ce dispositif permet d'évaluer la capacité d'abattement du mercure par un solide en appliquant le principe de la courbe de percée. La capacité d'abattement est exprimée en (µg Hg)/g de solide. Les tableaux 1 et 2 synthétisent les modes de préparation et les performances d'abattement du mercure pour les exemples 1 à 7 et l'exemple comparatif.

### Exemple comparatif

On place de l'halloysite ou de la chaux disponibles dans le commerce, dans le réacteur décrit ci-dessus. On réalise une courbe de percée à une température fixe de 130°C. La capacité d'abattement du mercure de cette halloysite et de cette chaux conventionnelles, non dopée dans le dispositif précédemment décrit est respectivement de 40 (µg Hg)/g d'halloysite et de 1 (µg Hg)/g de chaux.

### Exemple 1

On réalise selon l'invention le trempage d'une halloysite et d'une chaux analogues à celles de l'exemple comparatif. Ce trempage est réalisé en immergeant respectivement l'halloysite et la chaux dans une solution aqueuse d'une teneur de 10 % en poids de KBr par rapport au poids de la solution aqueuse. L'halloysite humide et la chaux humide ainsi dopées sont séchées et désagglomérées, à une température de 75°C dans une étuve, de façon à atteindre une humidité résiduelle inférieure à 50 g/kg. La quantité de KBr déposée sur l'halloysite et sur la chaux après séchage est de 10 % en poids par rapport au poids de la composition obtenue selon l'invention. La capacité d'abattement du mercure de cette halloysite et de cette chaux dopées au KBr selon l'invention dans le dispositif précédemment décrit et fonctionnant dans les mêmes conditions opératoires qu'à l'exemple comparatif, est respectivement de 486 (µg Hg)/ g d'halloysite dopée et 24 (µg Hg)/ g de chaux dopée.

**Tableau 1 - Synthèse des essais en laboratoire - Chaux**

| Exemple | comparatif | 1 |
|---|---|---|
| Additif | aucun | KBr |
| Solution de départ | - | 10% |
| Mode de dopage | - | Trempage |
| Humidité après imprégnation | - | 50 % |
| Température de séchage | - | 75°C |
| Taux d'additif imprégné | - | 10 % |
| Abattement mercure (µg Hg/g) | 1 | 24 |

### Exemple 2

On réalise selon l'invention, une pulvérisation d'une halloysite analogue à celle de l'exemple comparatif. La pulvérisation est réalisée à partir d'une solution aqueuse d'une teneur de 27 % en poids de KBr par rapport au poids de la solution aqueuse. La solution est pulvérisée sur l'halloysite sous agitation mécanique, jusqu'à obtenir une humidité de 20 %. L'halloysite humide ainsi dopée est séchée et désagglomérée, à une température de 150°C dans une étuve, de façon à atteindre une humidité résiduelle inférieure à 50 g/kg. La quantité de KBr déposée sur l'halloysite après séchage est de 6 % exprimée en poids par rapport au poids de la composition. La capacité d'abattement du mercure de cette halloysite dopée au KBr est égale à 198 (µg Hg)/ g d'halloysite dopée.

### Exemple 3

L'exemple 2 est reproduit mais avec solution à 27 % en poids de MgCl₂ par rapport au poids de la solution aqueuse. La solution est pulvérisée sur l'halloysite sous agitation mécanique, jusqu'à obtenir une humidité de 15 %. La quantité de MgCl₂ déposée sur l'halloysite après séchage est de 6 % exprimée en poids par rapport au poids de la composition. La capacité d'abattement du mercure mesurée est égale à 326 (µg Hg)/ g d'halloysite dopée.

### Exemple 4

L'exemple 2 est reproduit mais avec solution à 27 % en poids de MgBr₂ par rapport au poids de la solution aqueuse. La solution est pulvérisée sur l'halloysite sous agitation mécanique, jusqu'à obtenir une humidité de 15 %. La quantité de MgBr₂ déposée sur l'halloysite après séchage est de 6 % exprimée en poids par rapport au poids de la composition. La capacité d'abattement du mercure mesurée est égale à 3140 (µg Hg)/ g d'halloysite dopée.

### Exemple 5

L'exemple 2 est reproduit mais avec solution à 27 % en poids de CaCl₂ par rapport au poids de la solution aqueuse. La solution est pulvérisée sur l'halloysite sous agitation mécanique, jusqu'à obtenir une humidité de 17 %. La quantité de CaCl₂ déposée sur l'halloysite après séchage est de 6 % exprimée en poids par rapport au poids de la composition. La capacité d'abattement du mercure mesurée est égale à 215 (µg Hg)/ g d'halloysite dopée.

### Exemple 6

L'exemple 2 est reproduit mais avec solution à 27 % en poids de CaBr₂ par. rapport au poids de la solution aqueuse. La solution est pulvérisée sur l'halloysite sous agitation mécanique, jusqu'à obtenir une humidité de 15 %. La quantité de CaBr₂ déposée sur l'halloysite après séchage est de 6 % exprimée en poids par rapport au poids de la composition. La capacité d'abattement du mercure mesurée est égale à 447 (µg Hg)/ g d'halloysite dopée.

### Exemple 7

L'exemple 2 est reproduit mais avec solution à 9 % en poids de NH₄I par rapport au poids de la solution aqueuse. La solution est pulvérisée sur l'halloysite sous agitation mécanique, jusqu'à obtenir une humidité de 16 %. La quantité de NH₄I déposée sur l'halloysite après séchage est de 2 % exprimée en poids par rapport au poids de la composition. La capacité d'abattement du mercure mesurée est égale à 1940 (µg Hg)/ g d'halloysite dopée.

**Tableau 2 - Synthèse des essais en laboratoire - Halloysite**

| Exemple | comparatif | 1 | 2 | 3 | 4 | 5 | 6 | 7 |
|---|---|---|---|---|---|---|---|---|
| Additif | aucun | KBr | KBr | MgCl₂ | MgBr₂ | CaCl₂ | CaBr₂ | NH₄I |
| Solution de départ | - | 10 % | 27 % | 27 % | 27 % | 27 % | 27 % | 9 % |
| Mode de dopage | - | Trempage | Pulv. | Pulv. | Pulv. | Pulv. | Pulv. | Pulv. |
| Humidité après imprégnation | - | 50 % | 20 % | 15 % | 15 % | 17 % | 15 % | 16 % |
| Température de séchage | - | 75°C | 150°C | 150°C | 150°C | 150°C | 150°C | 150°C |
| Taux d'additif imprégné | - | 10 % | 6 % | 6 % | 6 % | 6 % | 6.5 % | 2 % |
| Abattement mercure (µg Hg/g) | 40 | 486 | 198 | 326 | 3140 | 215 | 447 | 1940 |

### Exemple 8 : effet de la concentration de la solution dopante

On répète l'exemple 2 en imprégnant 4 échantillons d'halloysite analogue à celle de l'exemple comparatif par pulvérisation avec des solutions de MgBr₂ de concentration valant respectivement 5 %, 9 %, 27 %, 35 % afin d'obtenir une teneur en additif déposé de, respectivement, 1 %, 2 %, 6 % et 10 %. L'halloysite imprégnée est placée dans un réacteur maintenu à une température fixe de 130°C. La capacité d'abattement du mercure est respectivement de 509, 905, 3140, 3980 (µg Hg)/ g d'halloysite dans les conditions de l'essai. On observe donc un accroissement significatif de l'abattement de mercure pour une concentration croissante en halogénure de l'halloysite dopée.

### Exemple 9 : Influence de la température du réacteur

L'exemple 2 est reproduit mais avec solution à 27 % en poids de *CaBr₂* par rapport au poids de la solution aqueuse. La quantité de CaBr₂ déposée sur l'halloysite après séchage est de 1,2 % exprimée en poids par rapport au poids de la composition. On réalise une courbe de percée à des températures fixes de 130°C, 200°C, 250°C et 300°C. La capacité d'abattement du mercure mesurée est respectivement égale à 367, 829, 926 et 848 (µg Hg)/ g d'halloysite dopée dans les conditions de l'essai. Ces résultats démontrent l'utilisation avantageuse des compositions dopées selon l'invention, notamment entre 200°C et 300°C.

### Exemple 10 : échelle industrielle

Selon l'invention, on dope de l'halloysite analogue à celle de l'exemple comparatif par pulvérisation dans un mélangeur industriel. A cette fin, on pulvérise une solution aqueuse d'une teneur de 25 % en poids de KBr par rapport au poids de la solution aqueuse. Le débit d'halloysite dopée, humide à 18 %, est de 200 kg/h. Cette dernière est désagglomérée et séchée dans un broyeur/sécheur à cage (*cage mill*), à l'aide de gaz chauds à environ 400-450°C et un temps de séjour tel que les gaz sortent du broyeur/sécheur à environ 150°C. On obtient une halloysite selon l'invention, séchée et à 10 % en poids de KBr poids par rapport au poids de la composition.

On utilise l'halloysite ainsi dopée dans une ligne de traitement de fumées présentant un débit d'environ 150 000 Nm³/h issues du recyclage de métaux non ferreux. L'halloysite dopée est dosée au moyen d'une vis et injectée de manière pneumatique dans le courant gazeux à 170°C à raison de 60 kg/h, puis collectée dans un filtre à manches, notamment avec les poussières de combustion.

On a mesuré les concentrations en mercure en amont du point d'injection de l'halloysite dopée et en aval du filtre à manches par absorption atomique (MERCEM de Sick-Maihak). Les concentrations mesurées, normalisées sur gaz secs et rapportées à 20 % d'oxygène sont de :
- 87 µg/Nm³ en amont et
- 13 µg/Nm³ en aval. Ce résultat témoigne d'un taux d'abattement en mercure de 85 %.

### Exemple 11 : échelle industrielle

On utilise l'halloysite dopée de l'exemple 10 dans une ligne de traitement de fumées présentant un débit d'environ 20 000 Nm³/h issues du recyclage de métaux non ferreux. L'halloysite dopée est dosée au moyen d'une vis et injectée de manière pneumatique dans le courant gazeux à 70°C à raison de 30 kg/h, puis collectée dans un filtre à manches, notamment avec les poussières de combustion.

On a mesuré les concentrations en mercure en amont du point d'injection de l'halloysite dopée et en aval du filtre à manches par absorption atomique. Les concentrations mesurées, normalisées sur gaz sec et rapportées à 21 % d'oxygène sont de :
- 450 µg/Nm³ en amont et
- 30 µg/Nm³ en aval. Ce résultat est inférieur à la réglementation en vigueur de 50 µg/Nm³ et témoigne d'un taux d'abattement en mercure de 93 %.

Il doit être entendu que la présente invention n'est en aucune façon limitée aux modes de réalisation décrits ci-dessus et que bien des modifications peuvent y être apportées sans sortir du cadre des revendications annexées.

## Revendications

1. Composition solide d'abattement de métaux lourds dans les gaz de fumées comprenant un composé minéral **caractérisé en ce que** le composé minéral est solide et dopé par un sel d'halogénure, c'est-à-dire que sa surface accessible auxdits gaz de fumées est partiellement ou complètement couverte par un sel d'halogénure, ledit composé minéral étant choisi dans le groupe constitué de l'halloysite, des hydroxydes de calcium ou magnésium, ainsi que de leurs mélanges.

2. Composition selon la revendication 1, dans laquelle ledit sel d'halogénure est un sel d'halogénure inorganique.

3. Composition selon la revendication 1 ou 2, dans laquelle ledit composé minéral est de préférence choisi dans le groupe constitué de l'halloysite, de la chaux éteinte, ainsi que de leurs mélanges.

4. Composition selon l'une quelconque des revendications 1 à 3, dans laquelle ledit sel d'halogénure est présent en une quantité sur base sèche allant de 0,5 % à 20 % en poids, de préférence de 1 % à 15 % en poids et en particulier de 1,5 % à 10 % en poids de sel d'halogénure sur la base du poids de la composition.

5. Composition selon l'une quelconque des revendications précédentes, dans laquelle ledit sel d'halogénure est un halogénure alcalin, un halogénure alcalino-terreux ou analogue, de préférence choisi dans le groupe constitué de NaCl, NaBr, Nal, KCl, KBr, KI, CaCl₂, CaBr₂, Cal₂, MgCl₂, MgBr₂, Mgl₂, NH₄Cl, NH₄Br ou NH₄I ou leurs mélanges.

6. Composition selon l'une quelconque des revendications précédentes, dans laquelle le composé minéral est sous forme pulvérulente et présente un d₉₀ inférieur à 1 mm et en particulier une taille de particules comprise entre 1 µm et 1 mm.

7. Procédé de préparation d'une composition d'abattement des métaux lourds dans les gaz de fumées selon l'une quelconque des revendications 1 à 6, comprenant les étapes de :
- alimentation d'un composé minéral solide choisi dans le groupe constitué de l'halloysite, des hydroxydes de calcium ou magnésium ainsi que de leurs mélanges,
- alimentation en un sel d'halogénure sous forme liquide, en phase aqueuse, et
- mise en contact dudit composé minéral et dudit sel d'halogénure, et
- formation d'un composé minéral dopé au sel d'halogénure, solide.

8. Procédé selon la revendication 7, dans lequel ladite mise en contact dudit composé minéral et dudit sel d'halogénure est réalisée sous agitation.

9. Procédé selon la revendication 7 ou la revendication 8, dans lequel ledit composé minéral alimenté présente une humidité comprise entre 0,1 et 100 g/kg, avantageusement entre 2 et 90 g/kg.

10. Procédé selon l'une quelconque des revendications 7 à 9, dans lequel ladite mise en contact est effectuée à température ambiante.

11. Procédé selon l'une quelconque des revendications 7 à 10, dans lequel ladite étape de mise en contact dudit composé minéral et dudit sel d'halogénure est une pulvérisation dudit sel d'halogénure sur ledit composé minéral.

12. Procédé selon l'une quelconque des revendications 7 à 10, dans lequel ladite étape de mise en contact dudit composé minéral et dudit sel d'halogénure est un trempage dudit composé minéral dans ledit sel d'halogénure en phase liquide.

13. Procédé selon l'une quelconque des revendications 7 à 12, dans lequel ledit sel d'halogénure en phase liquide est une solution aqueuse présentant une teneur en sel d'halogénure comprise entre 1 % et la saturation en sel de la solution, notamment entre 1 % et 35 %, de préférence entre 5 % et 27 % en poids par rapport au poids total de ladite solution.

14. Procédé selon l'une des revendications 7 à 13, comprenant en outre une étape de séchage et de désagglomération dudit composé minéral dopé au sel d'halogénure, de préférence à une température comprise entre 60 et 200°C, en particulier entre 75 et 170°C.

15. Procédé selon l'une quelconque des revendications 7 à 14, dans lequel ledit sel d'halogénure est un halogénure alcalin, un halogénure alcalino-terreux ou analogue, de préférence choisi dans le groupe constitué de N_{A}Cl, NaBr, Nal, KCI, KBr, KI, CaCl₂, CaBr₂, Cal₂, MgCl₂, MgBr₂, Mgl₂, NH₄Cl, NH₄Br ou NH₄I ou leurs mélanges.

16. Utilisation de la composition selon l'une quelconque des revendications 1 à 6, pour l'abattement des métaux lourds, de préférence à l'état gazeux, en particulier de mercure et tout particulièrement de mercure métallique Hg°, dans les gaz de fumées.

17. Utilisation selon la revendication 16 avec une autre matière solide, en particulier en mélange avec un agent basique tel que de la chaux.

18. Utilisation selon la revendication 16 ou 17, dans laquelle ledit composé minéral dopé est mis en contact avec les gaz de fumées à une température allant de 70 à 350°C, notamment entre 110 et 300°C et de préférence entre 120 et 250°C.

## Patentansprüche

1. Feste Zusammensetzung zur Verringerung des Schwermetallgehalts in Rauchgasen mit einer Mineralverbindung, **dadurch gekennzeichnet, dass** die Mineralverbindung fest und mit einem Halogenidsalz dotiert ist, das heißt, dass ihre für die erwähnten Rauchgase zugängliche Oberfläche teilweise oder zur Gänze mit einem Halogenidsalz bedeckt ist, wobei die Mineralverbindung aus der Gruppe bestehend aus Halloysit, Calcium- oder Magnesiumhydroxiden, sowie deren Mischungen, ausgewählt ist.

2. Zusammensetzung nach Anspruch 1, in der das erwähnte Halogenidsalz ein anorganisches Halogenidsalz ist.

3. Zusammensetzung nach Anspruch 1 oder 2, in der die erwähnte Mineralverbindung bevorzugt aus der Gruppe bestehend aus Halloysit, Löschkalk, sowie deren Mischungen, ausgewählt ist.

4. Zusammensetzung nach irgendeinem der Ansprüche 1 bis 3, in der das erwähnte Halogenidsalz in einer Menge auf Trockenbasis reichend von 0,5 bis 20 Gew.-%, vorzugsweise von 1 bis 15 Gew.-% und insbesondere von 1,5 bis 10 Gew.-% des Halogenidsalzes auf Basis des Gewichts der Zusammensetzung vorliegt.

5. Zusammensetzung nach irgendeinem der vorigen Ansprüche, in der das erwähnte Halogenidsalz ein alkalisches Halogenid, ein alkalisch-erdiges oder analoges Halogenid ist, bevorzugt ausgewählt aus der Gruppe bestehend aus NaCl, NaBr, Nal, KCl, KBr, KI, CaCl₂, CaBr₂, Cal₂, MgCl₂, MgBr₂, Mgl₂, NH₄Cl, NH₄Br oder NH₄I oder deren Mischungen.

6. Zusammensetzung nach irgendeinem der vorigen Ansprüche, in der die Mineralverbindung in Pulverform vorliegt und einen d₉₀ von weniger als 1 mm und insbesondere eine Partikelgröße von zwischen 1 µm und 1 mm aufweist.

7. Verfahren zur Herstellung einer Zusammensetzung zur Verringerung des Schwermetallgehalts in Rauchgasen nach irgendeinem der Ansprüche 1 bis 6, das folgende Schritte umfasst:
- Zufuhr einer festen Mineralverbindung ausgewählt aus der Gruppe bestehend aus Halloysit, Calcium- oder Magnesiumhydroxiden, sowie deren Mischungen,
- Zufuhr eines Halogenidsalzes in flüssiger Form, in wässriger Phase, und
- Inkontaktbringen der erwähnten Mineralverbindung und des erwähnten Halogenidsalzes, und
- Bildung einer Mineralverbindung dotiert mit Halogenidsalz, fest.

8. Verfahren nach Anspruch 7, in dem das erwähnte Inkontaktbringen der erwähnten Mineralverbindung und des erwähnten Halogenidsalzes unter Schütteln erfolgt.

9. Verfahren nach Anspruch 7 oder Anspruch 8, in dem die erwähnte zugeführte Mineralverbindung eine Feuchtigkeit von zwischen 0,1 und 100 g/kg, vorzugsweise von zwischen 2 und 90 g/kg aufweist.

10. Verfahren nach irgendeinem der Ansprüche 7 bis 9, in dem das erwähnte Inkontaktbringen bei Raumtemperatur erfolgt.

11. Verfahren nach irgendeinem der Ansprüche 7 bis 10, in dem der erwähnte Schritt des Inkontaktbringens der erwähnten Mineralverbindung und des erwähnten Halogenidsalzes ein Aufsprühen des erwähnten Halogenidsalzes auf die erwähnte Mineralverbindung ist.

12. Verfahren nach irgendeinem der Ansprüche 7 bis 10, in dem der erwähnte Schritt des Inkontaktbringens der erwähnten Mineralverbindung und des erwähnten Halogenidsalzes ein Eintauchen der erwähnten Mineralverbindung in das erwähnte Halogenidsalz in Flüssigphase ist.

13. Verfahren nach irgendeinem der Ansprüche 7 bis 12, in dem das erwähnte Halogenidsalz in Flüssigphase eine wässrige Lösung mit einem Gehalt an Halogenidsalz von zwischen 1 % und der Sättigung der Lösung an Salz ist, insbesondere von zwischen 1 % und 35 %, vorzugsweise zwischen 5 % und 27 Gew.-% im Verhältnis zum Gesamtgewicht der erwähnten Lösung.

14. Verfahren nach irgendeinem der Ansprüche 7 bis 13, welches ferner einen Schritt der Trocknung und Desagglomeration der erwähnten, mit dem Halogenidsalz dotierten Mineralverbindung umfasst, vorzugsweise bei einer Temperatur von zwischen 60 und 200 °C, insbesondere zwischen 75 und 170 °C.

15. Verfahren nach irgendeinem der Ansprüche 7 bis 14, in dem das erwähnte Halogenidsalz ein alkalisches Halogenid, ein alkalisch-erdiges oder analoges Halogenid ist, bevorzugt ausgewählt aus der Gruppe bestehend aus NaCl, NaBr, Nal, KCl, KBr, KI, CaCl₂, CaBr₂, Cal2, MgCl₂, MgBr₂, Mgl₂, NH₄Cl, NH₄Br oder NH₄I oder deren Mischungen.

16. Verwendung der Zusammensetzung nach irgendeinem der Ansprüche 1 bis 6, zur Verringerung des Gehalts an Schwermetallen, vorzugsweise in gasförmigem Zustand, insbesondere von Quecksilber und speziell von metallischem Quecksilber Hg°, in den Rauchgasen.

17. Verwendung nach Anspruch 16 mit einem anderen festen Material, insbesondere in Mischung mit einem basischen Wirkstoff wie Kalk.

18. Verwendung nach Anspruch 16 oder 17, in der die erwähnte dotierte Mineralverbindung mit den Rauchgasen bei einer Temperatur von zwischen 70 und 350 °C, insbesondere zwischen 110 und 300 °C und bevorzugt zwischen 120 und 250 °C, in Kontakt gebracht wird.

## Claims

1. Solid composition for reducing heavy metals in flue gases comprising a mineral compound **characterized in that** said mineral compound is solid and doped with a halide salt, i.e., for which the surface accessible to flue gases is partly or completely covered with a halide salt, said mineral compound being selected from the group consisting of halloysite, calcium or magnesium hydroxides, as well as of mixtures thereof.

2. Composition according to claim 1, wherein said halide salt is an inorganic halide salt.

3. Composition according to claim 1 or 2, wherein said mineral compound is preferably selected from the group consisting of halloysite, slaked lime, as well as mixtures thereof.

4. Composition according to any of claim 1 to 3, wherein said halide salt is present in an amount on a dry basis ranging from 0.5% to 20% by weight, preferably from 1% to 15% by weight and in particular from 1.5% to 10% by weight of halide salt on the basis of the weight of the composition.

5. Composition according to any of the preceeding claims, wherein said halide salt is an alkaline halide, an alkaline-earth halide or the like, preferably selected from the group consisting of NaCl, NaBr, Nal, KCI, KBr, KI, CaCl₂, CaBr₂, Cal₂, MgCl₂, MgBr₂, Mgl₂, NH₄Cl, NH₄Br or NH₄I or mixtures thereof.

6. Composition according to any of the preceeding claims, wherein the mineral compound is in powdery form and has a d₉₀ of less than 1 mm and in particular a particle size comprised between 1 µm and 1 mm.

7. A method for preparing a composition for reducing heavy metals in flue gases according to any one of claims 1 to 6, comprising the steps of:
- supplying a mineral compound selected from the group consisting of halloysite, calcium or magnesium hydroxides as well as mixtures thereof,
- supplying a halide salt in liquid form, in an aqueous phase, and
- putting into contact said mineral compound and said halide, and
- formation of a mineral compound doped with the halide salt, solid.

8. Method according to claim 7, wherein said putting into contact of said mineral compound and of said halide salt is achieved with stirring.

9. Method according to claim 7 or 8, wherein said supplied mineral compound has a humidity comprised between 0.1 and 100 g/kg, advantageously between 2 and 90 g/kg.

10. Method according to any one of claims 7 to 9, wherein said putting into contact is carried out at room temperature.

11. Method according to any one of claims 7 to 10, wherein said step of putting into contact said mineral compound and said halide salt is spraying of said halide salt on said mineral compound.

12. Method according to any one of claims 7 to 10, wherein said step of putting into contact said mineral compound and said halide salt is soaking of said mineral compound in said halide salt in a liquid phase.

13. Method according to any one of claims 7 to 12, wherein said halide salt in a liquid phase is an aqueous solution having a halide salt content comprised between 1% and the salt saturation of the solution, notably between 1% and 35%, preferably between 5% and 27% by weight based on the total weight of said solution.

14. Method according to any one of claims 7 to 13, further comprising a step for drying and/or deagglomerating said mineral compound doped with the halide salt, preferably at a temperature comprised between 60 and 200° C, in particular between 75 and 170° C.

15. Method according to any one of claims 7 to 14, wherein said halide salt is an alkaline halide, an alkaline-earth halide or the like, preferably selected from the group consisting of NaCl, NaBr, Nal, KCI, KBr, KI, CaCl₂, CaBr₂, Cal₂, MgCl₂, MgBr₂, Mgl₂, NH₄Cl, NH₄Br or NH₄I or mixtures thereof.

16. Use of the composition according to any one of claims 1 to 6, for reducing heavy metals, preferably in the gas state, in particular mercury and most particularly metallic mercury Hg⁰, in flue gases.

17. Use according to claim 16 with another solid material, in particular in a mixture with a basic agent such as lime.

18. Use according to claim 16 or 17, wherein said doped mineral compound is put into contact with the flue gases at a temperature ranging from 70 to 350° C, notably between 110 and 300° C and preferably between 120 and 250° C.
